# EUROPÄISCHE PATENTSCHRIFT

(11) **EP 0 944 886 B1**
(45) Veröffentlichungstag und Bekanntmachung des Hinweises auf die Patenterteilung: **14.01.2004**
(21) Anmeldenummer: 97952872.6
(22) Anmeldetag: 04.12.1997
(51) Int. Cl.: G08B 13/24

(54) **DIEBSTAHLSICHERUNGS-SYSTEM, INSBESONDERE FÜR TEXTILIEN, LEDERWAREN OD. DGL.**
ANTI-THEFT SYSTEM, IN PARTICULAR FOR TEXTILES, LEATHER GOODS FOR SIMILAR
SYSTEME ANTIVOL, NOTAMMENT POUR TEXTILES, ARTICLES EN CUIR OU SIMILAIRE

(30) Priorität: 23.12.1996 DE 29622334 U
(43) Veröffentlichungstag der Anmeldung: 29.09.1999
(73) Patentinhaber: August Bünger Bob-Textilwerk GmbH & Co. KG, 42277 Wuppertal (DE)
(72) Erfinder: BÜNGER, Claus, Michael, D-42107 Wuppertal (DE)
(74) Vertreter: Mentzel, Norbert, Dipl.-Phys.
(86) Internationale Anmeldenummer: PCT/EP1997/006771
(87) Internationale Veröffentlichungsnummer: WO 1998/028722

(56) Entgegenhaltungen:
- EP-A- 0 822 527
- WO-A-91/19279
- DE-C- 4 437 477
- DE-U- 29 509 066
- FR-A- 2 606 704
- US-A- 3 998 173
- PATENT ABSTRACTS OF JAPAN vol. 014, no. 550 (E-1009), 6.Dezember 1990 & JP 02 235387 A (FUJII PROCESS KK;OTHERS: 02), 18.September 1990,

## Beschreibung

Die Erfindung richtet sich auf ein Diebstahlsicherungs-System der im Oberbegriff des Anspruches 1 genannten Art. Bei einem solchen Diebstahlsicherungs-System wird ein Alarmauslöser wie ein Transponder oder ein Magnetstreifen an einer Ware angebracht Wird die so gesicherte Ware an einem Detektor vorbeigeführt ohne den Alarmauslöser vorher zu entfernen oder ihn vorher zu entsichern, dann löst der Detektor einen Alarm aus.

Bei Alarmauslösern der oben genannten Art, wie z.B einem Transponder, gehört es zum Stand der Technik, eine Antenne aus Metalldraht in Form einer Spule auf einen Träger aufzubringen.
Zur vollen Funktion wird die Spule mit einem Kondensator zu einem Schwingkreis verbunden. Dieser Schwingkreis wird aktiv, wenn von außen, durch den Detektor, ein elektromagnetisches Feld auf die Spule einwirkt und dort induktiv ein Stromfluß erzeugt wird Der Alarmausloser erzeugt auf diese Weise seinerseits ein elektromagnetisches Feld, welches vom Detektor sensiert wird und der Alarm dadurch ausgelöst wird

Bei einer zweiten Art von Alarmauslösern ist die Antenne in Form eines magnetisierbaren oder auch eines dauer-magnetischen Streifens auf ein Klebe-Etikett aufgebracht. Bei der magnetisierbaren Ausführungsform ist es so, daß der Alarmauslöser vor der Austellung der Ware magnetisiert werden muß, und er erst bei einem Verkauf der Ware wieder entmagnetisiert wird.
Beiden Alarmauslösern diesen Typs ist gemeinsam, daß das von einem solchen Streifen ausgehende schwache Magnetfeld von einem im Ausgangsbereich befindlichen Detektor sensiert wird, wenn eine mit einem solchen Etikett gesicherte Ware an ihm vorbeigeführt wird. Der Detektor löst daraufhin einen Alarm aus.

Bei textilen Waren, werden die Alarmauslöser bisher z.B in ein Funktionsband, z.B. ein Bundband einer Hose, eingelegt, wie es aus der G9308632.6 bekannt ist. Diese Alarmauslöser konnen jedoch ertastet werden, und demnach auch unbefugt entfernt werden Von Nachteil ist es auch, daß für die Plazierung an der Ware ein separater, vom Verkaufspersonal durchzuführender Arbeitsgang durchgeführt werden muß.

Die WO 91/19279 zeigt ein Sicherungssystem, wo ein Transponder in Form eines Schwingkreises an einer Windel angeordnet ist. Der Transponder dient als Alarmauslöser, wenn ein die Windel tragendes Kind ein mit Detektoren gesicherten Raum verläßt. Hierbei ist der Schwingkreis auf einem flexiblem Substrat angeordnet, das wiederum im Inneren der Windel eingebettet ist. Die Fixierung des Substrates mitsamt dem Schwingkreis erfolgt durch Ankleben oder durch Einlegen in dafür vorgesehene Taschen oder Falten in der Polsterung der Windel. Ein Annähen der elektronischen Bauteile des Schwingkreises, insbesondere des Antennenbauteils an einen Träger wird bei diesem Alarmauslöser nicht an gesprochen. Somit liegen auch keine Fadenabschnitte vor, die den Antennendraht in seiner Lage fixieren.

Aus US-A-3 998 173 ist eine Methode bekannt, bei der leitende Drähte auf ein gewebeähnliches Substrat mit einem Faden festgenäht werden. Mit Hilfe dieser Methode wird ein Drahtnetz für den Reflektor einer Parabolantenne hergestefft.

Aufgabe der Erfindung ist es, ein System der im Oberbegriff des Anspruches 1 genannten Art zu entwickeln, daß die vorgenannten Nachteile vermeidet.

Dieses wird durch die im Kennzeichen des Anspruchs 1 genannten Maßnahmen erreicht. Demnach ist es von Vorteil, wenn das Antennenbauteil durch Annähen mittels eines Fadens direkt auf einen Träger, wie einem textilen Funktionsband angenäht ist Dadurch wird es erreicht, daß der Alarmauslöser nur noch sehr schwer ertastbar ist, und zum anderen, daß der Alarmauslöser direkt im Anschluß an den Fertigungsprozeß des Trägers auf diesem angeordnet werden kann Dies gilt insbesondere dann, wenn der Träger textiltechnisch gemäß den Ansprüchen 2 bis 5 hergestellt worden ist. Gemäß Anspruch 6 ist es jedoch auch möglich, Bauteile des Alarmauslösers auf eine Folie aufzunähen.

Je nach der Methode, mit der die Bauteile auf den Träger aufgenäht werden, kann es sinnvoll sein gemäß Anspruch 7, daß neben dem Faden auch noch ein Unterfaden zum Annähen der Bauteile verwendet wird. Dies hat den Vorteil, daß der Faden auf der rückwärtigen Seite des Trägers gegen ein Herausziehen gesichert ist. Der Unterfaden ist dabei durch die Schlaufen geführt, die auf der, den Alarmauslöserbauteilen abgewandten Seite des Trägers aus diesem heraustreten Gemäß Anspruch 9 kann es vorteilhaft sein, wenn die Antenne in eine Kordel integriert ist, und die Kordel auf einen Träger aufgenäht ist. Die Kordel wird bei einem Ertasten des Alarmauslosers nur als textile Applikation, und nicht als Alarmausloser wahrgenommen

Weitere Vorteile ergeben sich aus der nachfolgenden Beschreibung, den Unteransprüchen und den Zeichnungen, in denen die Erfindung in zwei Ausführungsbeispielen dargestellt ist. Es zeigen
- Fig 1: schematisch eine Aufsicht auf einen erfindungsgemäßen Alarmauslöser,
- Fig. 2: schematisch einen Schnitt durch ein Ausführungsbeispiel des Alarmauslösers entlang des Profils II - II in Fig. 1,
- Fig. 3: schematisch einen Schnitt durch ein zweites Ausführungsbeispiel des Alarmauslösers entlang eines Profils, entsprechend II - II in Fig. 1.

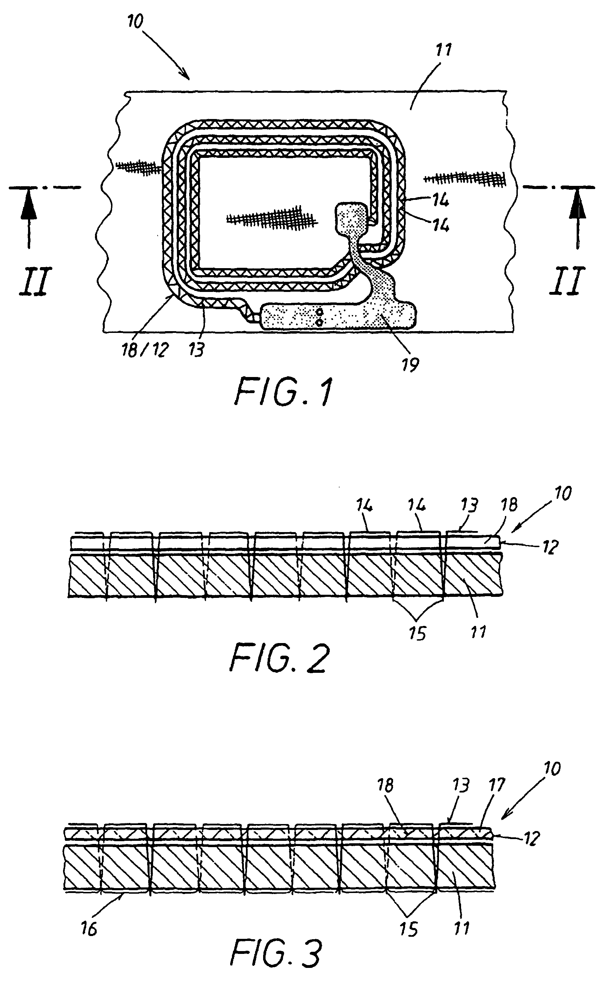

In Fig. 1 ist ein erfindungsgemäßer Alarmauslöser 10 dargestellt, bei dem eine Transponderschaltung, bestehend aus einem Kondensator 19 sowie einem Antennenbauteil 12 auf einem Träger 11 angeordnet ist. In diesem Ausführungsbeispiel besteht der Träger 11 aus einem textilen Material, wie es bei Funktionsbändern, wie z. B. Bundbändern od. dgl. verwandt wird. Das Antennenbauteil 12 ist mittels eines Nähfadens 13 auf dem Träger 11 angenäht und somit fixiert. An den Enden des Antennenbauteils 12 ist die Antenne 18 elektrisch leitend mit dem Kondensator 19 verbunden.

In den Fig. 2 und 3 sind Profilschnitte durch zwei unterschiedliche Ausführungsbeispiele des erfindungsgemäßen Alarmauslösers 10 dargestellt. Die Schnitte entsprechen in ihrer Lage dem Profile II - II in Fig. 1. In Fig. 2 ist ein Alarmauslöser 10 dargestellt, bei dem das Antennenbauteil 12 eine Antenne 18 aus Metalldraht ist. Diese Antenne 18 ist mit einem Nähfaden 13 am Träger 11 festgelegt. Der Nähfaden 13 ist in einzelne Fadenabschnitte 14 unterteilt. Jeder einzelne Fadenabschnitt 14 umfängt die Antenne 18. Die Enden zweier benachbarter Fadenabschnitte 14 bilden jeweils eine Schlaufe 15, die den Träger 11 hinterfängt. Die einzelnen Schlaufen 15 durchtreten dabei in einer, hinter der Antenne 18 liegenden Ebene sowie in einer vor der Antenne 18 liegenden Ebene den Träger 11, so daß die Antenne 18 in ihrer Lage am Träger 11 fixiert ist.

In dem Ausführungsbeispiel in Fig. 3 besteht der Unterschied zu dem Ausführungsbeispiel in Fig. 2 darin, daß das Antennenbauteil 12 nicht alleine aus einem Metalldraht besteht, sondern aus einer Kordel 17 in die eine Antenne 18 in Form eines dünnen metallischen Drahtes eingearbeitet ist. Des Weiteren ist es in diesem Ausfuhrungsbeispiel noch so, daß die Schlaufen 15 gegen ein Herausreißen aus dem Trager 11 durch ein zusätzliches Unterfangen mit einem Unterfaden 16 gesichert sind.

Es bleibt nun noch zu bemerken, daß neben den hier aufgezeichten Techniken zum Annähen des Antennenbauteils 12 und andere Bauteile an den Träger 11 auch noch andere Stichvarianten als die hier aufgezeigten Varianten möglich sind. Des Weiteren ist es auch noch so, daß auch andere Bauteile als das Antennenbauteil 12, wie z.B. der Kondensator 19, der in dem gezeigten Ausführungsbeispiel auf den Träger 11 aufgeklebt worden ist, ebenfalls durch Annähen am Träger 11 fixiert sein können.

### Bezugszeichenliste

- 10: Alarmauslöser
- 11: Träger
- 12: Antennenbauteil
- 13: Nähfaden
- 14: Fadenabschnitte
- 15: Schlaufe
- 16: Unterfaden
- 17: Kordel
- 18: Antenne
- 19: Kondensator

## Patentansprüche

1. Diebstahlsicherungs-System, insbesondere für Textilien, Lederwaren oder dergleichen, bei dem warenseitig ein Alarmauslöser angebracht ist,
und das über wenigstens einen Detektor in den Ausgangsbereichen eines Verkaufsraumes eines Ladens, Kaufhauses oder dergleichen verfügt, welcher auf den Vorbeigang einer mit dem Alarmauslöser (10) versehenen Ware anspricht,
und der Alarmauslöser (10) wenigstens ein, der Detektierbarkeit dienendes Antennenbauteil (12) aufweist, das sich an einem Träger (11) befindet,
**dadurch gekennzeichnet,**
**daß** der Alarmauslöser (10) neben dem Antennenbauteil (12) wenigstens einen Nähfaden (13) aufweist, der der Befestigung des Antennenbauteils (12) auf dem Träger (1 1) dient,
wobei das Antennenbauteil (12) eine aus mindestens zwei Windungen verlegte Antenne (18) ist,
und der Nähfaden (13) einzelne Fadenabschnitte (14) aufweist, die jeweils ein einzelnes Windungsstück der Antenne (18) umfangen, wobei die Enden der Fadenabschnitte (14) den Träger (11) durchsetzen und je zwei benachbarte Enden eine Schlaufe (15) bilden, die den Träger (11) hintergreift,
und die Windungen der Antenne (18) im Abstand zueinander durch die Fadenabschnitte (14) des Nähfadens (13) einzeln an dem Träger (11) fixiert sind.

2. Diebstahlsicherungs-System nach Anspruch 1, **dadurch gekennzeichnet, daß** der Träger (11) textiltechnisch hergestellt ist.

3. Diebstahlsicherungs-System nach Anspruch 1 oder 2, **dadurch gekennzeichnet, daß** der Träger (11) aus einem gewebten Material besteht.

4. Diebstahlsicherungs-System nach Anspruch 1 oder 2, **dadurch gekennzeichnet, daß** der Träger (11) aus einem gewirkten Material besteht.

5. Diebstahlsicherungs-System nach Anspruch 1 oder 2, **dadurch gekennzeichnet, daß** der Träger (1) aus einem Vliesstoff besteht.

6. Diebstahlsicherungs-System nach Anspruch 1 oder 2, **dadurch gekennzeichnet, daß** der Träger (11) aus einer Folie besteht.

7. Diebstahlsicherungs-System nach einem oder mehreren der Ansprüche 1 bis 6, **dadurch gekennzeichnet, daß** die Schlaufe (15) des Nähfadens (13) durch einen Unterfaden (16) gegen ein Lösen vom Träger (11) gesichert ist.

8. Diebstahlsicherungs-System nach einem oder mehreren der Ansprüche 1 bis 7, **dadurch gekennzeichnet, daß** das Antennenbauteil (12) eine Antenne (18) aus Metalldraht ist.

9. Diebstahlsicherungs-System nach einem oder mehreren der Ansprüche 1 bis 8, **dadurch gekennzeichnet, daß** das Antennenbauteil (12) eine Kordel (17) ist, in das eine Antenne (18) eingearbeitet ist.

10. Diebstahlsicherungs-System nach einem oder mehreren der Ansprüche 1 bis 9, **dadurch gekennzeichnet, daß** die Enden der Antenne (18) mit einem elektronischen Bauteil, insbesondere einem Kondensator (19), elektrisch leitend verbunden sind und die Antenne mit diesem zusammenwirkt.

11. Diebstahlsicherungs-System nach einem oder mehreren der Ansprüche 1 bis 10, **dadurch gekennzeichnet, daß** die Antenne (18) Teil einer Transponder-Schaltung ist.

12. Diebstahlsicherungs-System nach einem oder mehreren der Ansprüche 1 bis 11, **dadurch gekennzeichnet, daß** die Antenne (18) aus einem magnetischen Material besteht.

13. Diebstahlsicherungs-System nach einem oder mehreren der Ansprüche 1 bis 12, **dadurch gekennzeichnet, daß** die Antenne (18) aus einem magnetisierbaren Material besteht.

## Claims

1. Thief-proof system, particularly for textiles, leather goods or similar, whereby an alarm activator is fitted to the goods,
and at least one detector is provided in the exit areas of a salesroom or a shop, department store or similar, that is activated if goods provided with the alarm activator (10) passes by,
and the alarm activator (10) has at least one antenna assembly (12) serving to enable detection, that is fitted to a backing (11),
**characterized in that**
the alarm activator (10) has, in addition to the antenna assembly (12), at least one sewing thread (13) that serves to attach the antenna assembly (12) to the backing (11),
with the antenna assembly (12) being an antenna (18) consisting of at least two laid coils,
and the sewing thread (13) having single thread sections (14) each of which encloses a single coil of the antenna (18), with the ends of the thread sections (14) penetrating the backing (11) and two adjacent ends in each case forming a loop (15) that grips into the backing (11),
and with the coils of the antenna (18) being fixed, spaced apart from each other, individually to the backing (11) by means of the thread sections (14) of the sewing thread ( 13).

2. Thief-proof system in accordance with claim 1, **characterized in that** the backing (11) is manufactured using textile manufacturing methods.

3. Thief-proof system in accordance with claims 1 or 2, **characterized in that** the backing (11) consists of a woven material.

4. Thief-proof system in accordance with claims 1 or 2, **characterized in that** the backing (11) consists of a knitted material.

5. Thief-proof system in accordance with claims 1 or 2, **characterized in that** the backing (11) consists of a non-woven fabric.

6. Thief-proof system in accordance with claims 1 or 2, **characterized in that** the backing (11) consists of film/sheeting.

7. Thief-proof system in accordance with one or more of claims 1 to 6, **characterized in that** the loop (15) of the sewing thread (13) is locked against loosening from the backing (11) by a bobbin thread (16).

8. Thief-proof system in accordance with one or more of claims 1 to 7, **characterized in that** the antenna assembly (12) is an antenna (18) of metal wire.

9. Thief-proof system in accordance with one or more of claims 1 to 8, **characterized in that** the antenna assembly (12) is a cord (17) that is worked to form an antenna (18).

10. Thief-proof system in accordance with one or more of claims 1 to 9, **characterized in that** the ends of the antenna (18) are electrically connected to an electronic component, particularly a capacitor (19), and that the antenna interacts with this.

11. Thief-proof system in accordance with one or more of claims 1 to 10, **characterized in that** the antenna (18) is part of a transponder circuit.

12. Thief-proof system in accordance with one or more of claims 1 to 11, **characterized in that** the antenna (18) consists of a magnetic material.

13. Thief-proof system in accordance with one or more of claims 1 to 12, **characterized in that** the antenna (18) consists of a magnetizable material.

## Revendications

1. Système anti-vol notamment pour textiles, articles en cuir ou similaire pour lequel un dispositif de déclenchement d'alarme est apposé à la marchandise,
et disposant d'au moins un détecteur dans les zones de sortie d'un local de vente d'un magasin, d'un grand magasin ou similaire réagissant lors du passage d'une marchandise pourvue du dispositif de déclenchement d'alarme (10),
et le dispositif de déclenchement d'alarme (10) disposant au moins d'un élément antenne (12) servant à la détectabilité qui se trouve sur un support (11),
**caractérisé en ce que**
le dispositif de déclenchement d'alarme (10) présente outre l'élément antenne (12) au moins un fil de couture (13) servant à fixer l'élément antenne (12) sur le support (11),
l'élément antenne (12) étant une antenne (18) installée avec au moins deux enroulements,
et le fil de couture (13) présentant des sections de fil individuelles qui englobent respectivement un élément d'enroulement individuel de l'antenne (18), l'extrémité des sections de fil (14) pénétrant dans le support (11) et respectivement deux extrémités voisines formant une boucle (15) ayant prise derrière le support (11) et les enroulements de l'antenne (18) étant fixés individuellement au support (11) par les sections de fil (14) du fil de couture (13) à distance les unes des autres.

2. Système anti-vol selon la revendication 1 **caractérisé en ce que** le support (11) est fabriqué par technique textile.

3. Système anti-vol selon la revendication 1 ou 2 **caractérisé en ce que** le support (11) se compose d'un matériau tissé.

4. Système anti-vol selon la revendication 1 ou 2 **caractérisé en ce que** le support (11) se compose d'un matériau tricoté.

5. Système anti-vol selon la revendication 1 ou 2 **caractérisé en ce que** le support (11) se compose d'une étoffe nappée.

6. Système anti-vol selon la revendication 1 ou 2 **caractérisé en ce que** le support (11) se compose d'un film.

7. Système anti-vol conformément à une ou plusieurs des revendications 1 à 6 **caractérisé en ce que** la boucle (15) du fil de couture (13) est assurée par un fil inférieur (16) empêchant un détachement du support (11).

8. Système anti-vol conformément à une ou plusieurs des revendications 1 à 7 **caractérisé en ce que** l'élément antenne (12) est une antenne (18) en fil métallique.

9. Système anti-vol conformément à une ou plusieurs des revendications 1 à 8 **caractérisé en ce que** l'élément antenne (12) est une corde (17) dans laquelle l'antenne (18) est intégrée.

10. Système anti-vol conformément à une ou plusieurs des revendications 1 à 9 **caractérisé en ce que** les extrémités de l'antenne (18) sont associées de façon électroconductible à un organe électronique, en particulier à un condensateur (19) et que l'antenne agit avec celui-ci.

11. Système anti-vol conformément à une ou plusieurs des revendications 1 à 10 **caractérisé en ce que** l'antenne (18) est partie d'un circuit à transpondeur.

12. Système anti-vol conformément à une ou plusieurs des revendications 1 à 11 **caractérisé en ce que** l'antenne (18) se compose d'un matériau magnétique.

13. Système anti-vol conformément à une ou plusieurs des revendications 1 à 12 **caractérisé en ce que** l'antenne (18) se compose d'un matériau pouvant être magnétisé.
